# EUROPÄISCHE PATENTSCHRIFT

(11) **EP 2 741 230 B1**
(45) Veröffentlichungstag und Bekanntmachung des Hinweises auf die Patenterteilung: **02.03.2016**
(21) Anmeldenummer: 13193007.5
(22) Anmeldetag: 15.11.2013
(51) Int. Cl.: G06K 7/08, G06K 7/10

(54) **RFID-Lesetunnel zur Identifizierung von Objekten mittels RFID**
RFID reading tunnel for identifying objects by means of RFID
Tunnel de lecture RFID pour l'identification d'objets par RFID

(30) Priorität: 07.12.2012 DE 102012111986
(43) Veröffentlichungstag der Anmeldung: 11.06.2014
(73) Patentinhaber: SICK AG, 79183 Waldkirch (DE)
(72) Erfinder: Paske, Ralf, 79183 Waldkirch (DE); Wehrle, Klemens, 79297 Winden (DE)
(74) Vertreter: Ludewigt, Christoph

(56) Entgegenhaltungen:
- WO-A1-2009/002156
- US-A1- 2009 134 221

## Beschreibung

Die Erfindung betrifft einen RFID-Lesetunnel zur Identifizierung von Objekten mittels RFID nach dem Oberbegriff des Anspruchs 1.

Derartige RFID-Lesetunnel sind beispielsweise aus den Druckschriften DE 100 40 550 A1, EP 1 064 568 B1 und WO 2009/002156 A1 bekannt und häufig an automatischen Fluggepäck- oder Paketsortieranlagen installiert. Jedes Objekt (Gepäckstück oder Paket) trägt einen RFID-Transponder, der von einem RFID-Lesegerät ausgelesen wird, so dass entsprechend der im Transponder gespeicherten Information eine individuelle Weiterbehandlung des Objektes erfolgen kann.

Das RFID-Lesegerät funktioniert nur mit einer RFID-Antenne, die die elektromagnetische Strahlung sendet und/oder empfängt. Da derartige Antennen im Radiofrequenzbereich stark streuen und die Strahlung einerseits außerhalb der Lesestation störend ist und andererseits die Strahlung selbst durch umliegende metallene Flächen oder Gegenstände gestört wird, ist eine Abschirmung vorgesehen, die einerseits abschirmt und andererseits konstante elektromagnetische Lesebedingungen im Lesebereich schafft. Wegen des großen Lesebereiches solcher Systeme und der gewünschten Rundumabschirmung, wobei Ein- und Ausfuhröffnungen für die Objekte bleiben müssen, bildet eine solche Abschirmung einen Tunnel.

Jeder Lesetunnel wird entsprechend der vorgesehenen Verwendung individuell dimensioniert und einzeln angefertigt, um an den verschiedensten Anlagen im Lesebereich jeweils konstante elektromagnetische Umgebungsbedingungen zu schaffen.

Das ist entsprechend kosten- und zeitaufwändig, denn eine individuelle Konstruktion bedarf eines individuellen Engineerings des Tunnels und einer individuellen Montage. Ein einmal montierter Lesetunnel ist nicht oder nur mit sehr großem Aufwand an neue spezifische Bedingungen anpassbar und es muss in der Regel eine Neukonstruktion erstellt werden. Weiter sind derartige Lesetunnel in der Regel recht groß, denn es muss jede Art von Gepäck oder Paket hindurchgefördert werden können, so dass die Tunnelwände nur mit einer Vielzahl Personen oder Hebegeräten montiert werden können.

Aus der US 2009/134221 A1 ist ein Lesetunnel für eine Warenhauskasse bekannt, in dem die Waren mittels PLIM-Modulen (planar light illumination module) optisch, z.b. mittels Barcodelesung, identifiziert werden. Zusätzlich weist der Lesetunnel ein RFID Deaktivierungsgerät auf, mit dem RFID-Tags eines Diebstahlsicherungsystems deaktiviert werden können.

Ausgehend von diesem Stand der Technik ist es Aufgabe der Erfindung einen verbesserten RFID-Lesetunnel bereitzustellen, der kostengünstiger ist und einfacher installiert werden kann.

Diese Aufgabe wird gelöst durch einen RFID-Lesetunnel mit den Merkmalen des Anspruchs 1.

Es wird also ein Satz vordefinierter und damit quasi standardisierter Module bereit gestellt, aus dem der Konstrukteur Module auswählt und damit den Tunnel aufbaut. Da die Module vordefiniert sind, muss er weniger berücksichtigen und lediglich die gewünschte Geometrie bzw. Größe des Tunnels aus den vorgegebenen Modulen aufbauen. Das bedeutet nicht nur eine erhebliche Vereinfachung beim Design und Montage des erfindungsgemäßen Tunnels, sondern bietet auch die vorteilhafte Möglichkeit, eine einfache Anpassung eines bestehenden Tunnels an neue Rahmenbedingungen vorzunehmen. Solche neuen Rahmenbedingungen können sich zum Beispiel beim Austausch von Anlagenteilen, z.B. des Förderbandes, ergeben, wenn nämlich das neue Förderband eine andere Breite hat. Auch bietet die Erfindung die Möglichkeit, einen bestehenden erfindungsgemäßen Tunnel von einer Anlage abzubauen und an einer andere Anlage neu zu installieren, wobei durch die Modularität eine sehr bequeme Anpassung an die Geometrie vorgenommen werden kann. Insgesamt ermöglicht der modulare Aufbau eine flexible Realisierung unterschiedlicher Anforderungen mit geringem individuellem Engineeringaufwand.

Wegen der begrenzten Größe der Module, die erst möglich wird durch den modularen Aufbau, sind die Module und damit der Tunnel sehr leicht zu transportieren und einfach und schnell vor Ort montierbar. Hebezeuge oder mehrere Personen sind für den Aufbau nicht notwendig. Transport- und Montagekosten sind damit erheblich reduziert.

In Weiterbildung der Erfindung sind die vordefinierten Module gemäß den Merkmalen des Anspruches 2 ausgebildet. Mit einem solchen Satz Module lassen sich die meisten Anforderungen an RFID-Lesetunnel erfüllen.

Es ist vorteilhaft, wenn der RFID-Lesetunnel gemäß den Merkmalen des Anspruchs 3 ausgebildet ist.

Für eine einfache und in gewisser Weise standardisierte Verbindung sind die Module in vordefinierten Winkeln miteinander über entsprechende Verbindungselemente verbindbar. Dabei können die Verbindungselemente alle gleichartig ausgebildet sein und nur unterschiedliche Winkel aufweisen, so dass für einen bestimmten Winkel ein jeweils zugeordnetes Verbindungselement vorgesehen ist. In Weiterbildung der Erfindung sind die Standardmodule rechteckförmig ausgebildet und alle Module haben die gleiche Länge. Es wäre dabei sinnvoll, wenn es zumindest zwei unterschiedliche Breiten gibt. Das erhöht die Variabilität bei der Gestaltung eines Tunnels erheblich und ausreichend.

Ein einfacher Aufbau ist möglich, wenn die Modullänge die Tunnellänge definiert. Um nicht nur eine RFID-Lesung in dem Lesetunnel zu ermöglichen, sondern auch noch andere Detektionsaufgaben, ist in Weiterbildung der Erfindung wenigstens ein Zusatzmodul vorgesehen gemäß den Merkmalen des Anspruches 8.

In bestimmten Anwendungen kann es sinnvoll sein, eine RFID-Lesung von unten vorzunehmen. Dafür ist in Weiterbildung der Erfindung ein Modul unterhalb der Ablage- oder Fördereinrichtung angeordnet, das von unten das Lesevolumen im Tunnel abschirmt und gegebenenfalls als Standardmodul mit Antenne ausgebildet ist.

Im Folgenden wird die Erfindung anhand von Ausführungsbeispielen unter Bezugnahme auf die Zeichnung im Einzelnen erläutert. In der Zeichnung zeigen:
- Fig. 1: eine perspektivische Ansicht eines schematisch dargestellten, erfindungsgemäßen RFID-Lesetunnels;
- Fig. 2 und 3: Ansichten des RFID-Lesetunnels aus Fig. 1 ohne Stützrahmen;
- Fig. 4 und 5: Ansichten zweier Standardmodule;
- Fig. 6: eine Explosionsdarstellung zur Erläuterung der Verbindung zweier Standardmodule;
- Fig. 7: eine Ansicht einer weiteren Ausführungsform.

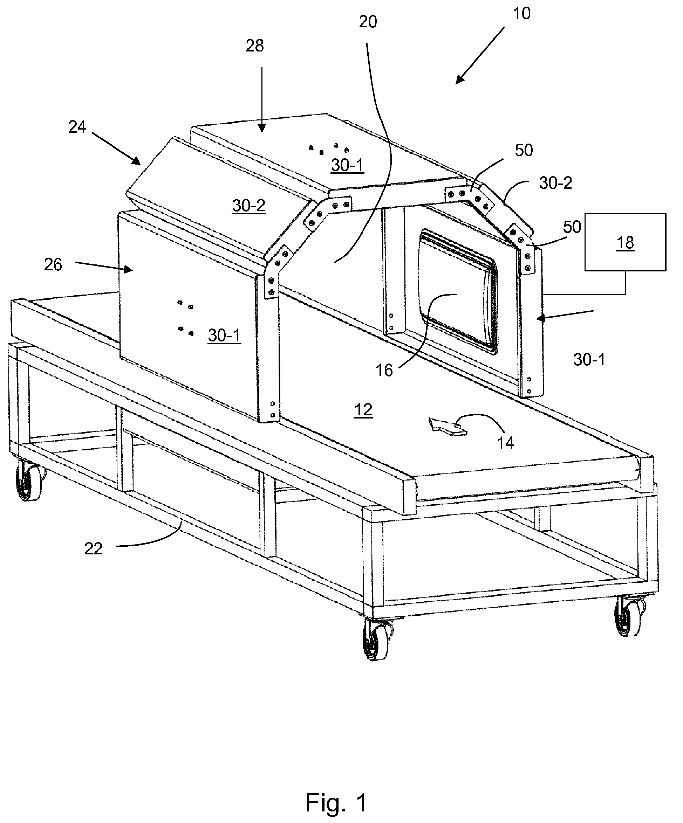

Ein erfindungsgemäßer RFID-Lesetunnel 10 ist in der Ausführungsform nach Fig. 1 an einem Förderband 12 montiert. Das Förderband 12 fördert nicht dargestellte Objekte, die einen RFID-Transponder (auch RFID-Tag genannt) tragen, in eine Richtung 14 durch den Tunnel 10 hindurch. In dem Tunnel sind RFID-Antennen 16 angeordnet, die entsprechende RFID-Signale senden und empfangen, um die Transponder innerhalb des Tunnels 10 in einem Lesebereich 20 auslesen und/oder beschreiben zu können. Dazu sind die Antennen 16 mit einem RFID-Lesegerät 18 verbunden. Der Tunnel 10 und das Förderband 12 sind auf einem Gestell 22 montiert.

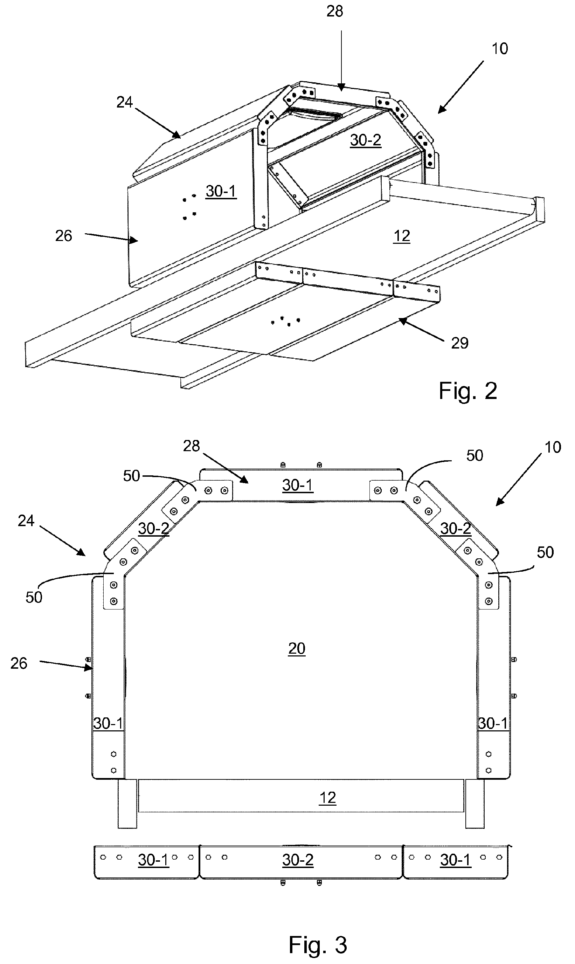

Damit in dem Lesebereich 20 konstante elektromagnetische Bedingungen vorliegen, ist der Lesebereich 20 von den Tunnel bildender Abschirmung 24 begrenzt. Die Abschirmung 24 umfasst Seitenwände 26 und Deckenteile 28 und in der Ausführungsform nach Fig. 1 bis 3 auch Unterteile 29 . Die Seitenwände 26, Deckenteile 28 und Unterteile 29 sind erfindungsgemäß durch Module gebildet, die in dem Ausführungsbeispiel nach Fig. 1 bis 3 aus lediglich zwei verschiedenen Standardmodulen 30-1 und 30-2 aufgebaut sind.

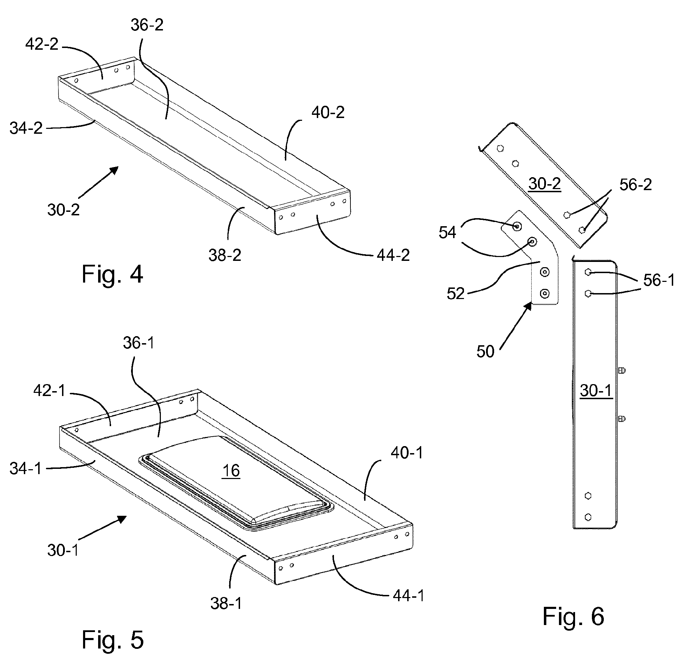

Das Standardmodul 30-1 ist in einer perspektivischen Ansicht in Fig. 5 dargestellt und weist einen rechteckförmigen, wannenartigen Grundkörper 34-1 auf mit einem Wannenboden 36-1 und Wannenlängsseitenwänden 38-1 und 40-1 mit einer Länge L-1 sowie Wannenstirnseitenwänden 42-1 und 44-1 mit einer Länge B-1. Im Inneren des wannenartigen Grundkörpers 34-1 ist eine der RFID-Antennen 16 befestigt.

Das Standardmodul 30-2, das in perspektivischer Ansicht in Fig. 4 dargestellt ist, ist analog wie das Modul 30-1 aufgebaut mit Grundkörper 34-2, Wannenboden 36-2, Wannenlängsseitenwänden 38-2 und 40-2 sowie Wannenstirnseitenwänden 42-2 und 44-2. Jedoch ist im Unterschied zu dem Modul 30-1 die Breite B-2 des Moduls 30-2 kleiner.

Im Innern der Wannen 34-1 und 34-2 kann ein elektromagnetische Strahlung absorbierender Absorber vorgesehen sein.

Auf diese Weise kann ein Satz vordefinierter Module als Standardmodule ausgebildet sein, wobei die Standardmodule in der beschriebenen Weise einfach aus dem wannenartigen Grundkörper bestehen können und so ein einfaches Abschirmmodul bilden oder einen zusätzlichen Absorber enthalten können oder eine Antenne enthalten können oder sowohl Antenne als auch Absorber enthalten können. Ein solcher Satz würde dann vier vom Aufbau her verschiedene Standardmodule aufweisen, die gegebenenfalls noch je zwei verschiedene Breiten aufweisen können.

Für eine einfache und in gewisser Weise standardisierte Verbindung sind die Standardmodule in vordefinierten Winkeln miteinander über entsprechende Verbindungselemente 50 entlang ihrer Längsseiten variabel und lösbar miteinander verbindbar. Dies soll in Fig. 6 dargestellt sein, in der die zu verbindenden Teile aber getrennt dargestellt sind. Die Verbindungselemente 50 sind alle gleichartig ausgebildet und werden zur Verbindung der Module entlang ihrer Längsseiten 36-x und 38-x ("x" ist Platzhalter für "1" oder "2") an den Stirnseiten 42-x und 44-x festgelegt. In dem Ausführungsbeispiel nach Fig. 1 bis 3 bestehen die Verbindungselemente 50 aus einer Metallplatte 52, die über entsprechend positionierte Löcher 54 zwei Module 30-1 und 30-2 mittels Befestigungsmitteln, wie Schrauben verbinden. Die Module weisen dazu ebenfalls entsprechend positionierte Löcher 56-1 und 56-2 für die Befestigungsmittel in ihren Stirnseiten auf. Die Löcher 54 des Verbindungselements 50 sind derart positioniert, dass die verbundenen Module 30-1 und 30-2 einen Winkel von 135° bilden.

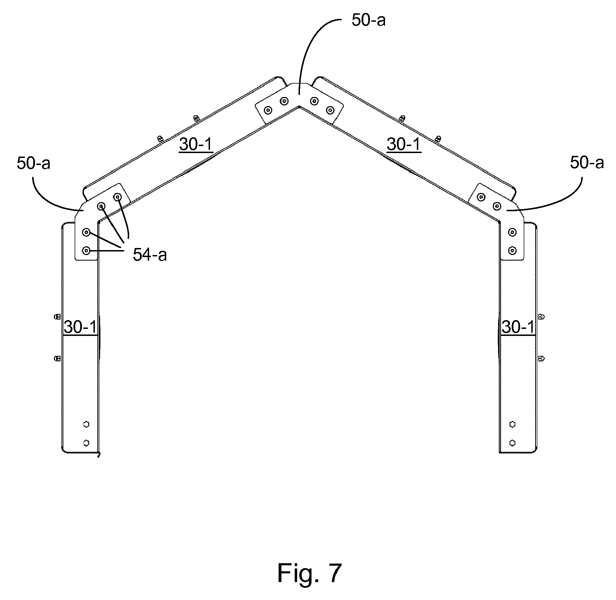

Andere Winkel sind denkbar und sinnvoll, wie das Ausführungsbeispiel nach Fig. 7 zeigt, in dem das Verbindungselement 50-a so dimensioniert und die Löcher 54-a so positioniert sind, dass die verbundenen Module einen Winkel von 120° einschließen. In diesem Ausführungsbeispiel besteht der Lesetunnel aus vier Standardmodulen 30-1.

Insgesamt ist damit ein RFID-Lesetunnel aufgebaut, der sehr flexibel ausgestaltbar ist. Jedes Standardmodul dient mindestens als Abschirmung und wenigsten ein Standardmodul muss eine RFID-Antenne enthalten, damit überhaupt eine RFID-Lesung möglich ist. In bestimmten Anwendungen kann es sinnvoll sein, eine RFID-Lesung auch von unten vorzunehmen. Dafür ist ein Standardmodul mit Antenne unterhalb der Ablage- oder Fördereinrichtung angeordnet, das von unten das Lesevolumen im Tunnel abschirmt und mittels der Antenne eine RFID-Tag lesen kann.

Um nicht nur eine RFID-Lesung in dem Lesetunnel 10 zu ermöglichen, können nicht dargestellte Zusatzmodule vorgesehen sein. Ein solches Zusatzmodul hat grundsätzlich den gleichen Aufbau wie ein Standardmodul, weist also den wannenartigen Grundkörper auf mit gleichen Abmessungen wie ein Standardmodul. Zusätzlich ist aber in dem Zusatzmodul eine zusätzliche Einrichtung, wie ein Barcodeleser zum Lesen eines Barcodes und/oder eine Kamera zur Erfassung von Objektmerkmalen und/oder ein Sensor, z.B. Laserscanner, zur Volumenbestimmung und ein Sensor zur Gewichtsbestimmung. Da das Zusatzmodul wie ein Standardmodul aufgebaut ist, kann es in dem Tunnel ein Standardmodul ersetzen, so dass ein derart ausgerüsteter Lesetunnel neben einer RFID-Lesung weitere Funktionen, wie Barcodelesung, erfüllen kann.

Es sei noch einmal betont, dass mit den beschriebenen Modulen und Verbindungselementen eine Vielzahl von RFID-Lesetunneln verschiedener Größe und Form aufgebaut werden können und in dieser Beschreibung nur zwei Ausführungsbeispiele (Fig. 1 und Fig. 7) beispielhaft zur Verdeutlichung des Prinzips der Erfindung beschrieben sind.

## Patentansprüche

1. RFID-Lesetunnel zur Identifizierung von Objekten mittels RFID mit wenigstens einem RFID-Lesegerät (18) mit wenigstens einer RFID-Antenne (16), mit einer den Tunnel (10) bildenden Abschirmung (24) für elektromagnetische Strahlung der RFID-Antenne (16) mit Seitenwänden (26) und Deckenteil (28), einer Ablage- oder Fördereinrichtung (14) für das Objekt in dem oder durch den Tunnel (10), **dadurch gekennzeichnet, dass** die Abschirmung (26) durch Module (30-1, 30-2) gebildet ist, die variabel und lösbar miteinander verbindbar sind und die Module (30-1, 30-2) aus einem Satz vordefinierter Module (30-1, 30-2) ausgewählt sind, die einen wannenartigen Grundkörper (34-1) aufweisen, wobei wenigstens eines der vordefinierten Module ein Abschirmmodul (30-1) ist, in dessen Grundkörper (34-1) die Antenne (16) aufgenommen ist.

2. RFID-Lesetunnel nach Anspruch 1, **dadurch gekennzeichnet, dass** die vordefinierten Module weiter ausgebildet sein können als:
- Abschirmmodule und/oder
- Abschirmmodule mit einem zusätzlichen Absorber und/oder
- Abschirmmodule mit einer Antenne und mit Absorber.

3. RFID-Lesetunnel nach Anspruch 1 oder 2, **dadurch gekennzeichnet, dass** der wannenartige Grundkörper einen ebenen Wannenboden, der die Tunnelwand bildet aufweist und dass die Module in vordefinierten Winkeln miteinander verbindbar sind.

4. RFID-Lesetunnel nach Anspruch 3, **dadurch gekennzeichnet, dass** für einen bestimmten Winkel ein jeweils zugeordnetes Verbindungselement vorgesehen ist.

5. RFID-Lesetunnel nach einem der vorhergehenden Ansprüche, **dadurch gekennzeichnet, dass** die Module rechteckförmig ausgebildet sind und alle Module die gleiche Länge haben.

6. RFID-Lesetunnel nach Anspruch 5, **dadurch gekennzeichnet, dass** die Modullänge die Tunnellänge definiert.

7. RFID-Lesetunnel nach Anspruch 5 oder 6, **dadurch gekennzeichnet, dass** gleichartige Module mit unterschiedlichen Breiten vorgesehen sind.

8. RFID-Lesetunnel nach einem der vorhergehenden Ansprüche, **dadurch gekennzeichnet, dass** wenigstens ein weiteres Zusatzmodul vorgesehen ist, das wie ein vordefiniertes Modul ausgebildet ist und zusätzlich
- eine Barcodeleseeinrichtung und/oder
- eine Kamera zur Erfassung von Objektmerkmalen und/oder
- wenigstens einen Sensor zur Erkennung von Objekteigenschaften, wie Volumen oder Gewicht
aufweist.

9. RFID-Lesetunnel nach einem der vorhergehenden Ansprüche, **dadurch gekennzeichnet, dass** ein Modul unterhalb der Ablage- oder Fördereinrichtung angeordnet ist.

## Claims

1. An RFID reading tunnel for identifying objects by means of RFID with at least one RFID reading device (18) having at least one RFID antenna (16), with a screen (24) for electromagnetic radiation of the RFID antenna (16), the screen forms the tunnel (10) and has side walls (26) and a cover part (28), a placing down device or conveying device (14) for the object in or through the tunnel (10), **characterized in that** the screen (24) is formed by modules (30-1, 30-2) which can be connected to one another variably and releasable; and wherein the modules (30-1, 30-2) are selected from a kit of predefined modules (30-1, 30-2) comprising a tub-like base body (34-1) wherein at least one of the predefined modules is a screen module (30-1) in which base body (34-1) the antenna is arranged.

2. The RFID reading tunnel in accordance with claim 1, wherein the predefined modules can be further configured as:
- screen modules;
- screen modules with an additional absorber;
- screen modules with an antenna and with an absorber.

3. The RFID reading tunnel in accordance with claim 1 or 2, wherein the tub-like base body comprises a planar tub base which forms the tunnel wall; and wherein the modules can be connected to one another at predefined angles.

4. The RFID reading tunnel in accordance with claim 3, further comprising a respectively associated connection element for a specific angle.

5. The RFID reading tunnel in accordance with any preceding claim, wherein the modules are configured as rectangular and all the modules have the same length.

6. The RFID reading tunnel in accordance with claim 5, wherein the module length defines the tunnel length.

7. The RFID reading tunnel in accordance with claim 5 or 6, wherein modules of a similar type are provided with different widths.

8. The RFID reading tunnel in accordance with any preceding claim, further comprising at least one further additional module, said at least one further additional module being configured as a predefined module having at least one of the following members selected from the group comprising:
- an barcode reading device;
- an camera for detecting object features; and
- at least one sensor for recognizing object properties, like volume or weight.

9. The RFID reading tunnel in accordance with any preceding claim, wherein a module is arranged beneath the placing down device or conveyor device.

## Revendications

1. Tunnel de lecture RFID pour identifier des objets au moyen de la technologie RFID, comprenant au moins un appareil de lecture RFID (18) avec au moins une antenne RFID (16) avec un blindage (24) formant le tunnel (10) pour le rayonnement électromagnétique de l'antenne RFID (16) avec des parois latérales (26) et une partie de couverture (28), avec un dispositif de dépose ou de convoyage (14) pour l'objet dans le tunnel (10) ou à travers celui-ci, **caractérisé en ce que** le blindage (26) est formé par des modules (30-1, 30-2) qui peuvent être reliés les uns aux autres de manière variable et détachable, et les modules (30-1, 30-2) sont sélectionnés parmi un jeu de modules prédéfinis (30-1, 30-2) qui comportent un corps de base (34-1) semblable à une cuve, et l'un au moins des modules prédéfinis est un module de blindage (30-1) avec un corps de base (34-a) dans lequel est reçue l'antenne (16).

2. Tunnel de lecture RFID selon la revendication 1, **caractérisé en ce que** les modules prédéfinis peuvent en outre être réalisés comme :
- des modules de blindage et/ou
- des modules de blindage avec un absorbeur additionnel et/ou
- des modules de blindage avec une antenne et avec un absorbeur.

3. Tunnel de lecture RFID selon la revendication 1 ou 2, **caractérisé en ce que** le corps de base semblable à une cuve comporte un fond de cuve qui forme la paroi du tunnel, et **en ce que** les modules sont susceptibles d'être reliés les uns aux autres sous des angles prédéfinis.

4. Tunnel de lecture RFID selon la revendication 3, **caractérisé en ce que** pour un angle déterminé il est prévu un élément de liaison respectivement associé.

5. Tunnel de lecture RFID selon l'une des revendications précédentes, **caractérisé en ce que** les modules sont réalisés sous forme rectangulaire et tous les modules ont la même longueur.

6. Tunnel de lecture RFID selon la revendication 5, **caractérisé en ce que** la longueur des modules définit la longueur du tunnel.

7. Tunnel de lecture RFID selon la revendication 5 ou 6, **caractérisé en ce qu'**il est prévu des modules de même type avec des largeurs différentes.

8. Tunnel de lecture RFID selon l'une des revendications précédentes, **caractérisé en ce qu'**il est prévu au moins un autre module additionnel, qui est réalisé comme un module prédéfini et qui comprend additionnellement
- un système de lecture de codes à barres et/ou
- une caméra pour détecter des caractéristiques des objets et/ou
- au moins un capteur pour reconnaître des propriétés des objets, comme le volume ou le poids.

9. Tunnel de lecture RFID selon l'une des revendications précédentes, **caractérisé en ce qu'**un module est agencé au-dessous du dispositif de dépose ou de convoyage.
